# EUROPÄISCHE PATENTANMELDUNG

(11) **EP 1 313 335 A1**
(43) Veröffentlichungstag der Anmeldung: **21.05.2003**
(21) Anmeldenummer: 01127592.2
(22) Anmeldetag: 19.11.2001
(51) Int. Cl.: H04Q 7/32

(54) **Verfahren zum Vorgeben und Prüfen einer Verbindungsaufbauberechtigung, zugehöriges Programmdatenpaket, zugehörige Vorrichtung und zugehöriges Programm**

(71) Anmelder: SIEMENS AKTIENGESELLSCHAFT, 80333 München (DE)
(72) Erfinder: Pasteanu, Calinel, 82269 Walleshausen (DE)

(57) **Zusammenfassung**

Erläutert wird unter anderem ein Verfahren, bei dem für ein Programm vor der Übermittlung zu einem Gerät (10) eines Nutzers (TlnA) ein Berechtigungsdatum (112) vorgegeben wird, dessen Wert ein Verbindungsaufbaurecht angibt. Ein von dem Programm unabhängiges Sicherheitsprogramm lässt einen Verbindungsaufbau über ein Datenübertragungsnetz (16) beim Ausführen des Programms abhängig vom Wert des Berechtigungsdatums (112) zu oder verweigert den Verbindungsaufbau (t200).

## Beschreibung

Die Erfindung betrifft ein Verfahren, bei dem beim Ausführen eines Programms ein Verbindungsaufbau über ein Datenübertragungsnetz veranlasst wird.

Das Datenübertragungsnetz überträgt die Daten durchschaltevermittelt oder in Datenpaketen. Ein Beispiel für ein durchschaltevermitteltes Datenübertragungsnetz ist ein Telekommunikationsnetz, das zur Übertragung von Sprachdaten eingesetzt wird. Es gibt aber auch durchschaltevermittelte Datenübertragungsnetze, welche das Übertragen von Datenpaketen erlauben, z.B. gemäß GPRS-Verfahren (General Packet Radio Service). Ein Beispiel für ein Datenübertragungsnetz, in welchem die Daten in Datenpaketen übertragen werden, ist das Internet. Die Datenübertragung im Internet ist auf unteren Protokollebenen verbindungslos. Jedoch werden auf höheren Protokollebenen ebenso wie in einem durchschaltevermittelten Datenübertragungsnetz Verbindungen aufgebaut, für die bestimmte Netzressourcen belegt werden, beispielsweise Übertragungskanäle oder Anschlussports. Nach der Übertragung der Daten wird die Verbindung wieder abgebaut.

Es ist Aufgabe der Erfindung, ein einfaches und wirkungsvolles Verfahren zum Vorgeben und Prüfen einer Verbindungsaufbauberechtigung anzugeben, das insbesondere einen unbefugten Verbindungsaufbau verhindert. Außerdem sollen ein zugehöriges Programmdatenpaket, eine zugehörige Vorrichtung und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Beim erfindungsgemäßen Verfahren wird für ein Programm, bei dessen Ausführung Verbindungen über ein Datenübertragungsnetz aufgebaut werden, vor der Übermittlung zu einem Gerät eines Nutzers des Programms ein Berechtigungsdatum vorgegeben, dessen Wert Verbindungsaufbaurechte angibt. Beispielsweise erlaubt der Wert einen uneingeschränkten Verbindungsaufbau, verbietet den Aufbau von Verbindungen oder macht den Aufbau von Verbindungen vom Vorliegen bestimmter Bedingungen abhängig. Das Programm wird gemeinsam mit dem Berechtigungsdatum zum Gerät eines Nutzers übermittelt, beispielsweise auf einem Datenträger oder über ein Datenübertragungsnetz. Der Datenträger ist beispielsweise ein magnetisches oder optisches Speichermedium.

Das übermittelte Programm und das Berechtigungsdatum werden in einer Speichereinheit des Gerätes gespeichert. Beim Ausführen des Programms wird ein Verbindungsaufbau über ein Datenübertragungsnetz veranlasst. Bevor es jedoch zu einem Verbindungsaufbau kommen kann, prüft ein Sicherheitsprogramm, dass ein von dem auszuführenden Programm unabhängiges Programm ist, an Hand des Wertes des Berechtigungsdatums, ob der Nutzer des Programms bzw. das Programm selbst zum Verbindungsaufbau berechtigt ist. Abhängig vom Wert des Berechtigungsdatums wird der Verbindungsaufbau zugelassen oder verweigert.

Das erfindungsgemäße Verfahren bietet die Möglichkeit, die Verbindungsaufbauberechtigung einheitlich für mehrere voneinander verschiedene Programme zu prüfen. So wird die Verbindungsaufbauberechtigung nicht durch die einzelnen Programme selbst, sondern durch das unabhängige Sicherheitsprogramm geprüft. Darüber hinaus wird der Nutzer nicht mit speziellen Fragen der Berechtigung zum Verbindungsaufbau belastet. Vom Nutzer wird höchstens eine Ja- bzw. Nein-Entscheidung verlangt, ob er einem Verbindungsaufbau zustimmt. Damit muss der Nutzer kein Spezialwissen über das Programm oder über das Sicherheitsprogramm besitzen, mit dessen Hilfe er Verbindungsaufbauberechtigungen vorgeben und verändern könnte. Das erfindungsgemäße Verfahren lässt sich außerdem auch ohne einen Systemadministrator durchführen, der ebenfalls Spezialwissen benötigt, um Verbindungsaufbaurechte zu vergeben.

Bei einer Weiterbildung des erfindungsgemäßen Verfahrens wird das Verfahren in einem Endgerät eines Datenübertragungsnetzes ausgeführt. Besonders bei Endgeräten in Mobilfunk-Datenübertragungsnetzen tritt das Problem auf, dass es für das Endgerät niemanden gibt, der allein die uneingeschränkte Berechtigung hat und der beispielsweise wie ein Administrator Einstellungen vornehmen könnte. So gibt es neben dem Nutzer des Endgerätes den Hersteller des Endgerätes sowie den Betreiber des Mobilfunknetzes. Das erfindungsgemäße Verfahren erlaubt es, das Berechtigungsdatum so vorzugeben, dass sowohl der Nutzer, als auch der Gerätehersteller, als auch der Netzbetreiber mit dieser Vorgabe einverstanden sind und gegebenenfalls auch zu einer Prüfung der Vorgabe berechtigt und in der Lage sind.

Bei einer nächsten Weiterbildung des erfindungsgemäßen Verfahrens wird das Berechtigungsdatum außerhalb des in Maschinencode vorliegenden Programms, d.h. eines sogenannten Maschinenprogramms, oder außerhalb des in Bytecode vorliegenden Programms übermittelt. Das Maschinenprogramm enthält Befehle, die im Befehlssatz eines Prozessors enthalten sind, der das Programm ausführen soll. Der Bytecode ist dagegen ein Zwischencode zwischen Quellcode und Maschinencode. Befehle in Bytecode müssen erst noch mit Hilfe eines Übersetzungsprogramms in prozessorabhängige Maschinenbefehle übersetzt werden. Beispielsweise wird Bytecode bei der Verwendung der Programmiersprache JAVA erzeugt, um eine Programmierung zu ermöglichen, die unabhängig von dem Typ des Prozessors ist, der letztlich die aus dem Bytecode erzeugten Maschinenbefehle ausführt. Dadurch, dass das Berechtigungsdatum außerhalb des Programms übermittelt wird, lassen sich bspw. für ein einheitliches Verfahren Positionen vorgeben, auf die auch ohne Kenntnis des Programmaufbaus zugegriffen werden kann.

Bei einer nächsten Weiterbildung gibt es mindestens zwei Arten von Programmtypen und mindestens zwei Werte für das Berechtigungsdatum. Es werden zulässige Zuordnungen der Programmtypen zu mindestens jeweils einem Wert vorgegeben, beispielsweise nach Art einer Tabelle. Der Tabellenkopf enthält beispielsweise mindestens drei verschiedene Werte für das Berechtigungsdatum. Die Tabellenzeilen sind beispielsweise mindestens drei Programmtypen zugeordnet. In den Feldern der Tabelle befinden sich beispielsweise Kreuze, wenn eine Zuordnung besteht. Besteht keine Zuordnung, treten Leerfelder auf. Jedem Programmtyp ist mindestens ein Wert zugeordnet. Einem Programmtyp können aber auch mehrere zulässige Werte zugeordnet werden. Die Zeilen der Tabelle sind bei einem Ausführungsbeispiel jeweils voneinander verschieden.

Der Wert des Berechtigungsdatums wird bei der Weiterbildung abhängig vom Programmtyp mit Hilfe der Zuordnungen bzw. der Tabelle ermittelt. Somit hat das Berechtigungsdatum einen Wert gemäß einer vorgegebenen zulässigen Zuordnung.

Eine solche Zuordnung ist gemäß einer anderen Weiterbildung besonders gut dafür geeignet, in einem Standard festgelegt zu werden, vorzugsweise in einem international gültigen Standard. Wie bereits erwähnt, ist die Erfindung besonders bei Mobilfunkgeräten einsetzbar, so dass das Standardisierungsgremium insbesondere ein Gremium ist, das Standards für Mobilfunkstationen oder für Mobilfunknetze vorgibt.

Bei einer nächsten Weiterbildung gibt es mindestens zwei der folgenden Programmtypen:
- einen Drittanbieter-Programmtyp, dem Programme zugeordnet werden, die nicht vom Hersteller des Gerätes und nicht vom Netzbetreiber des Netzes, über das die Verbindung aufgebaut wird, sondern von Dritten zur Verfügung gestellte werden,
- einen Gerätehersteller-Programmtyp, dem Programme zugeordnet werden, die vom Hersteller des Gerätes zur Verfügung gestellt werden, bspw. schon werksseitig, d.h. bevor das Gerät an den Nutzer ausgeliefert wird, und
- einen Netzbetreiber-Programmtyp, dem Programme zugeordnet werden, die vom Netzbetreiber des Netzes zur Verfügung gestellt werden, über das die Verbindungen aufgebaut werden.

Die Programme jeden Typs bauen Verbindungen über das Datenübertragungsnetz auf. Verbindungen zum Hersteller bzw. Netzbetreiber werden beispielsweise für Servicezwecke oder zum Erbringen spezieller Dienste für den Nutzer aufgebaut. Jedoch lassen sich auch eine Vielzahl anderer Programmtypen festlegen.

Bei einer anderen Weiterbildung des erfindungsgemäßen Verfahrens gibt es mindestens zwei der folgenden Werte für das Berechtigungsdatum:
- einen Wert, der einen Verbindungsaufbau nur mit Zustimmung eines Nutzers ermöglicht,
- einen Wert, der einen uneingeschränkten Verbindungsaufbau ermöglicht, und
- einen Wert, der einen Verbindungsaufbau abhängig von der Höhe eines Guthabens des Nutzers ermöglicht.

Die Werte sind selbstverständlich voneinander verschieden, um eine Unterscheidung zu ermöglichen. Jedoch lassen sich eine Vielzahl weiterer Werte für andere Bedingungen festlegen.

Bei einer Weiterbildung des erfindungsgemäßen Verfahrens lässt sich der Wert des Berechtigungsdatums im Gerät des Nutzers nicht mehr ändern. Durch diese Maßnahme wird gewährleistet, dass der einmal vorgegebene Wert des Berechtigungsdatums für einen Missbrauch nicht geändert werden kann. Der Missbrauch muss nicht nur vom Nutzer ausgehen, sondern kann auch von Dritten ausgehen.

Bei einer alternativen Weiterbildung lässt sich der Wert des Berechtigungsdatums nur mit Hilfe des Sicherheitsprogramms ändern. Durch diese Maßnahme lässt sich ein Missbrauch ebenfalls verhindern, ohne jedoch zu starke Beschränkungen aufzustellen. Beispielsweise lässt sich ein Missbrauch dann wirksam verhindern, wenn das Sicherheitsprogramm bspw. vom Nutzer nur unter Angabe eines Passwortes aufgerufen werden kann.

Bei einer nächsten Weiterbildung des erfindungsgemäßen Verfahrens vermerkt das Sicherheitsprogramm das Zulassen und/oder Verweigern eines Verbindungsaufbaus in einer Protokolldatei. Gibt es später zwischen mehreren Beteiligten, z.B. zwischen dem Nutzer und dem Netzbetreiber, Streit über die Höhe von Verbindungskosten, so lässt sich die Protokolldatei als Nachweis verwenden, den bei Einhaltung bestimmter Vorgaben auch beide Seiten akzeptieren.

Bei einer nächsten Weiterbildung wird zusammen mit dem Berechtigungsdatum mindestens ein digitales Zertifikat und/oder ein digitaler Schlüssel übertragen. Die digitalen Schlüssel dienen zur Ausführung elektronischer Verschlüsselungsverfahren, beispielsweise solcher Verfahren, wie sie im Standard der ITU-T (International Telecommunication Union - Telecommunication Sector) X.509 angesprochen sind. Bei einer Weiterbildung wird das Berechtigungsdatum digital verschlüsselt übermittelt und digital verschlüsselt gespeichert. Auch die Protokolldatei lässt sich mit dem digitalen Schlüssel verschlüsseln. Durch die Verschlüsselung ist eine unbefugte Änderung der Daten ausgeschlossen. Außerdem sind verschlüsselt gespeicherte Daten besser zum Nachweis der Verbindungen betreffenden Vorgänge geeignet als unverschlüsselt gespeicherte Daten.

Die Erfindung betrifft außerdem ein Programmdatenpaket, das einerseits Programmdaten in einem Maschinencode oder einem Bytecode enthält und das andererseits Metadaten enthält. Die Metadaten enthalten das Berechtigungsdatum. Bei Weiterbildungen wird das Programmdatenpaket gemäß dem erfindungsgemäßen Verfahren bzw. dessen Weiterbildungen übermittelt. Insbesondere ist das Berechtigungsdatum nach dem oben erläuterten Verfahren festgelegt.

Weiterhin betrifft die Erfindung eine Vorrichtung, insbesondere eine Datenverarbeitungsanlage, die zur Ausführung des erfindungsgemäßen Verfahrens verwendet wird. Bei Weiterbildungen enthält die Vorrichtung Einheiten, welche die Ausführungen der Weiterbildungen des erfindungsgemäßen Verfahrens ermöglichen.

Die Erfindung betrifft außerdem ein Programm, das insbesondere die Funktionen des Sicherheitsprogramms erbringt. Bei Weiterbildungen des Programms ist das Programm so aufgebaut, dass es zur Ausführung des erfindungsgemäßen Verfahrens oder einer seiner Weiterbildungen geeignet ist.

Damit gelten für das Programmdatenpaket, die Vorrichtung und das Programm die oben genannten technischen Wirkungen ebenfalls.

Im Folgenden werden Ausführungsbeispiele der Erfindung an Hand der beiliegenden Zeichnungen erläutert. Darin zeigen:
- Figur 1: Verfahrensschritte zum Erzeugen, Übertragen und Ausführen eines Programmpaketes,
- Figur 2: den Aufbau des Programmpaketes,
- Figur 3: Verfahrensschritte zum Prüfen eines Berechtigungsdatums, und
- Figur 4: zum Übertragen des Programmpaketes und Ausführen der Befehle des Programmpaketes eingesetzte Einheiten.

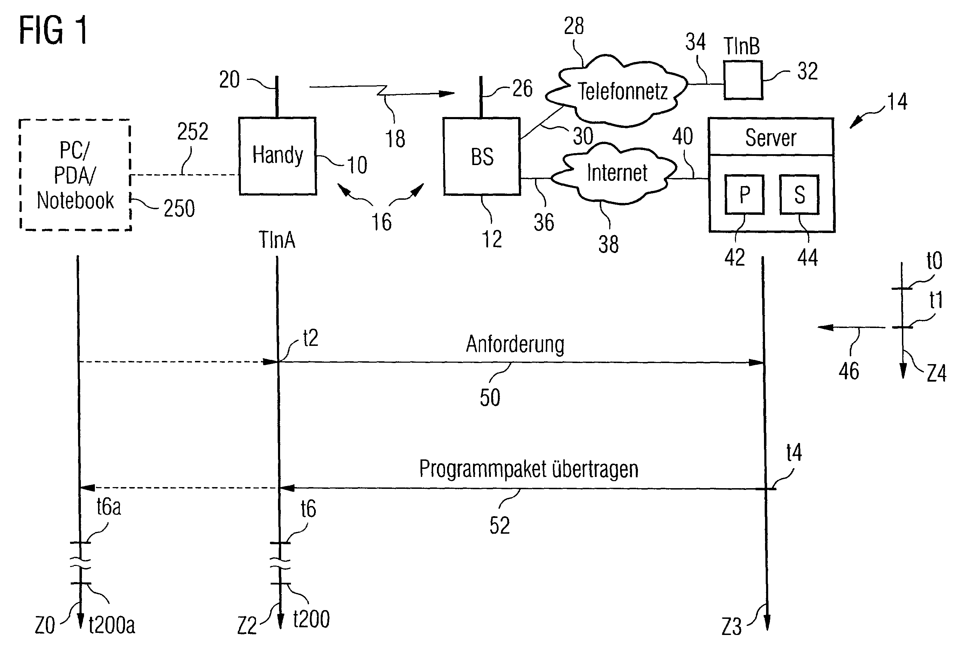

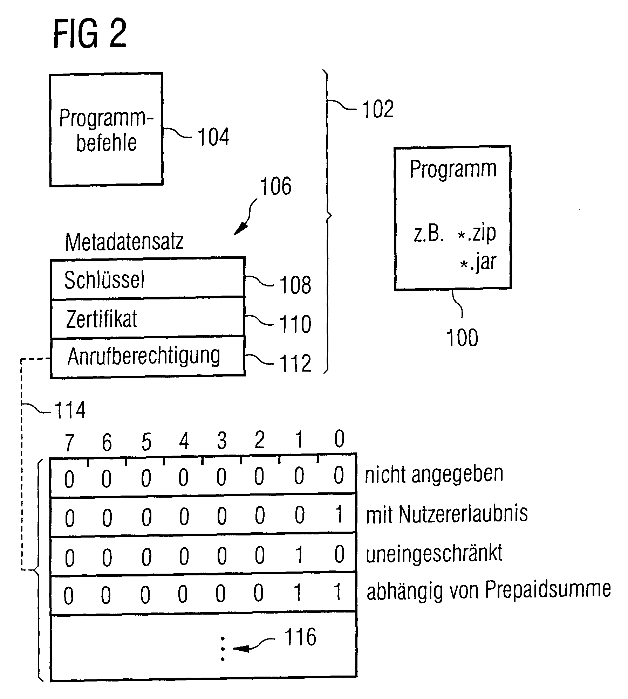

Figur 1 zeigt Verfahrensschritte zum Erzeugen und Übertragen eines Programmpaketes und zum Ausführen eines in dem Programmpaket enthaltenen Programms. Der Aufbau des Programmpaketes wird unten an Hand der Figur 2 näher erläutert. An der Ausführung der Verfahrensschritte sind bei einem ersten Ausführungsbeispiel ein Endgerät 10, eine Basisstation 12 und ein sogenannter Server 14 beteiligt.

Das Endgerät 10 und die Basisstation 12 sind Bestandteile eines Mobilfunk-Datenübertragungsnetzes 16, das beispielsweise gemäß GSM-Standard arbeitet (Global System for Mobile Communication). Zwischen dem Endgerät 10 und der Basisstation 12 gibt es eine bidirektional arbeitende Funkübertragungsstrecke 18.

Das Endgerät 10 wird auch als "Handy" bezeichnet und enthält neben einem nicht dargestellten Prozessor und einer nicht dargestellten internen Speichereinheit eine Antenne 20. Außerdem hat das Endgerät 10 eine nicht dargestellte Anzeigeeinheit und eine nicht dargestellte Eingabeeinheit, z.B. eine Tastatur.

Die Basisstation 12 enthält eine Antenne 26 und die bekannten, jedoch in Figur 1 nicht dargestellten, internen Verarbeitungseinheiten. Außerdem ist die Basisstation 12 mit einem durchschaltevermittelten Telefonnetz 28 verbunden, beispielsweise mit dem Telefonnetz der Deutschen Telekom AG. Zwischen der Basisstation 12 und dem Telefonnetz 28 liegt eine Anschlussleitung 30. In Figur 1 ist ein Teilnehmer TlnB dargestellt, dessen Telefon 32 über eine Anschlussleitung 34 mit dem Telefonnetz 28 verbunden ist. Außerdem ist die Basisstation 12 über eine Anschlussleitung 36 mit dem Internet 38 verbunden, in dem die Daten gemäß dem Internetprotokoll übertragen werden. Der Server 14 ist über eine Anschlussleitung 40 mit dem Internet 38 verbunden und enthält einen Prozessor 42 sowie eine Speichereinheit 44.

Vorgänge, die sich auf das Endgerät 10 beziehen, werden in Figur 1 mit Hilfe eines Zeitstrahls Z2 dargestellt. Ein Zeitstrahl Z3 dient zur Darstellung der Vorgänge, an denen der Server 14 beteiligt ist, bzw. die der Server 14 ausführt. Außerdem sind in Figur 1 zwei weitere Zeitstrahlen Z0 und Z4 gezeigt, deren Bedeutung sich aus den weiter unten stehenden Erläuterungen ergibt. Frühere Zeitpunkte liegen auf den Zeitstrahlen Z0 bis Z4 weiter oben als spätere Zeitpunkte. Gleiche Zeitpunkte liegen auf der gleichen Höhe.

Zu einem Zeitpunkt t0 stellt der Hersteller eines Programmpaketes das Programmpaket zusammen. Der Aufbau des Programmpaketes wird unten an Hand der Figur 2 näher erläutert. Das Programmpaket wird zu einem Zeitpunkt t1 in der Speichereinheit 44 des Servers 14 gespeichert, siehe Pfeil 40, und lässt sich beispielsweise mit Hilfe des WA-Protokolls (Wireless Application Protocol) auch zum Endgerät 10 übertragen.

Beispielsweise stellt ein Nutzer TlnA des Endgerätes 10 zu einem Zeitpunkt t2 eine Anforderung 50 an den Server 14, das Programmpaket zu übertragen. Die Anforderung 50 wird über die Funkübertragungsstrecke 18, die Basisstation 12 und das Internet 38 zum Server 14 übertragen.

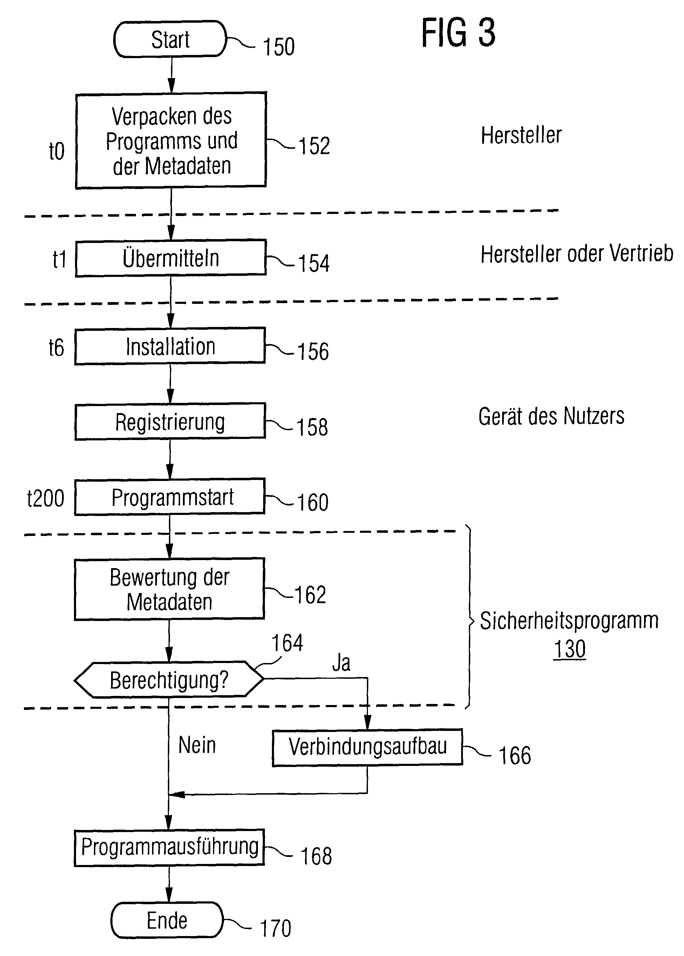

Der Server 14 bearbeitet die Anforderung 50 und überträgt das Programmpaket beginnend zu einem Zeitpunkt t4, siehe Pfeil 52. Nach dem Empfang des Programmpaketes im Endgerät 10 wird das in dem Programmpaket enthaltene Programm zu einem Zeitpunkt t6 installiert. Die dabei ausgeführten Verfahrensschritte werden unten an Hand der Figur 3 näher erläutert.

Zu einem späteren Zeitpunkt t200 wird das installierte Programm ausgeführt, wobei ein Verbindungsaufbau über das Mobilfunk-Datenübertragungsnetz 16 und gegebenenfalls auch über das Telefonnetz 28 oder das Internet 38 erforderlich ist. Die beim Ausführen des Programms ausgeführten Verfahrensschritte werden ebenfalls unten an Hand der Figur 3 näher erläutert.

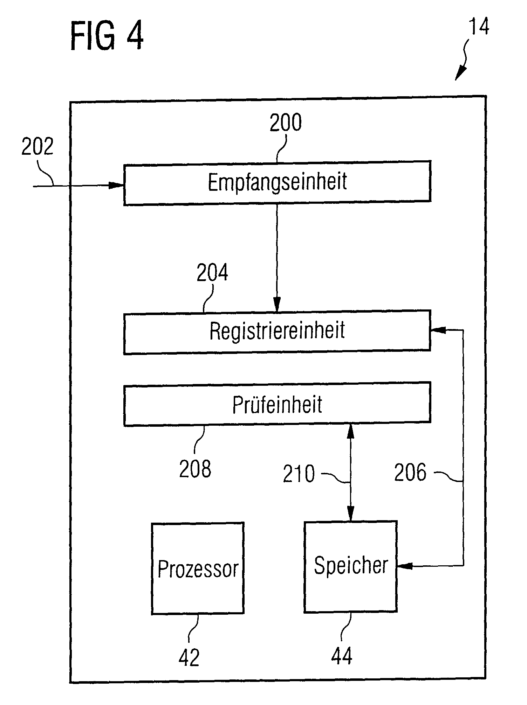

Die bisher an Hand der Figur 1 noch nicht erläuterten Einheiten und Vorgänge werden im Anschluss an die Erläuterungen zu der Figur 4 näher erläutert. Diese Einheiten werden bei einem alternativen Ausführungsbeispiel eingesetzt.

Figur 2 zeigt den Aufbau des Programmpaketes 100, das wie durch eine Klammer 102 angedeutet, die Programmbefehle 104 des Programms und einen Metadatensatz 106 enthält. Die Programmbefehle 104 dienen beispielsweise zum Erbringen der Funktionen eines e-Mail-Programms, das elektronische Briefe versendet oder empfängt, oder zum Erbringen der Funktionen eines Spielprogramms. Beim Ausführen der Programmbefehle 104 wird eine Verbindung aufgebaut, beispielsweise zum Telefonnetz 28 bzw. Internet 38, siehe Figur 1. Über die Verbindung wird beispielsweise eine e-Mail oder eine neue Spielvariante übertragen.

Der Metadatensatz 106 enthält Daten, die zur Ausführung der Programmbefehle 104 nicht benötigt werden, die jedoch Hilfsfunktionen erbringen. So enthält der Metadatensatz 106 beispielsweise einen elektronischen Schlüssel 108, ein elektronisches Zertifikat 110 und ein Berechtigungsdatum 112. Der elektronische Schlüssel 108 dient beispielsweise zum Verschlüsseln der Programmbefehle 104 und zum Verschlüsseln des Berechtigungsdatums 112. Das Zertifikat 110 wurde durch eine Zertifizierungsbehörde ausgestellt, und bestätigt die Echtheit des Schlüssels 108.

Das Berechtigungsdatum 112 legt die Verbindungsaufbaurechte des Programms 104 fest. Wie durch eine gestrichelte Linie 114 angedeutet, wurden verschiedene Werte für das Berechtigungsdatum festgelegt:
- durch den Wert Null wird angezeigt, dass eine Anrufberechtigung nicht spezifiziert worden ist,
- durch den Wert Eins wird angegeben, dass Verbindungen nur mit ausdrücklicher Erlaubnis des Teilnehmers TlnA ausgeführt werden dürfen,
- durch den Wert Zwei wird angegeben, dass uneingeschränkt Verbindungen aufgebaut werden dürfen,
- durch den Wert Drei wird angegeben, dass Verbindungen nur abhängig von einer bestimmten Prepaid-Summe aufgebaut werden dürfen, beispielsweise beim Vorhandensein von einer Prepaid-Summe von DM 50 für den Teilnehmer TlnA, und
- weitere Werte 116 für weitere Bedingungen.
Die Werte sind beispielsweise in einem international gültigen Standard festgelegt.

Im Ausführungsbeispiel hat das Berechtigungsdatum 112 beispielsweise den Wert Eins, so dass nur mit ausdrücklicher Erlaubnis des Benutzers, d.h. des Teilnehmers TlnA Verbindungen aufgebaut werden können. Die Erlaubnis lässt sich einmalig für viele Verbindungen oder bei jedem Verbindungsaufbau einholen.

Das Programmpaket 100 wird beispielsweise mit Hilfe eines bekannten Packprogramms komprimiert, z.B. mit Hilfe eines sogenannten ZIP-Programms oder mit Hilfe eines JAVA-Komprimierprogramms. Im ersten Fall hat das Programmpaket 100 die Dateiendung "zip". Im zweiten Fall hat das Programmpaket 100 die Dateiendung "jar".

Figur 3 zeigt unter anderem Verfahrensschritte zum Überprüfen des Berechtigungsdatums 112. Das Verfahren beginnt in einem Verfahrensschritt 150, der zum Zeitpunkt t0 ausgeführt wird. Im folgenden Verfahrensschritt 152 verpackt der Hersteller des Programms, so wie oben an Hand der Figur 2 erläutert, die Programmbefehle 104 und den Metadatensatz 106, einschließlich Berechtigungsdatum 112.

In einem Verfahrensschritt 154 übermittelt der Hersteller des Programms das Programmpaket 100 an den Server 14, siehe Figur 1, Zeitpunkt t1 und Pfeil 46.

Zum Zeitpunkt t6 wird das Programmpaket 100 auf dem Endgerät 10 entpackt und das Programm wird in der Speichereinheit des Endgerätes 10 gespeichert bzw. installiert, so dass es durch den Teilnehmer TlnA aufgerufen werden kann, siehe Verfahrensschritt 156. In einem folgenden Verfahrensschritt 158 wird das Programm automatisch bei einem Sicherheitsprogramm des Endgerätes 10 registriert.

Ein Verfahrensschritt 160 wird zum Zeitpunkt t200 ausgeführt, wenn der Teilnehmer TlnA eine e-Mail mit seinem Endgerät 10 verschicken möchte. Zum Verschicken der e-Mail muss das e-Mail-Programm eine Verbindung zum Internet 38 aufbauen. Beim Zugriff auf die dafür benötigte Hardware wird automatisch ein Sicherheitsprogramm 130 aufgerufen.

In einem Verfahrensschritt 142 wertet das Sicherheitsprogramm 130 den Wert des Berechtigungsdatums 112 aus. Im Ausführungsbeispiel hat das Berechtigungsdatum, wie bereits erwähnt, den Wert Eins. Das bedeutet, dass der Nutzer bzw. der Teilnehmer TlnA vor dem Verbindungsaufbau um eine manuelle Bestätigung gefragt werden muss. Auf der Anzeigeeinheit des Endgerätes 10 erzeugt das Sicherheitsprogramm 130 deshalb eine Eingabeanforderung. Im Ausführungsbeispiel sei angenommen, dass der Teilnehmer TlnA dem Verbindungsaufbau zustimmt. Deshalb gibt auch das Sicherheitsprogramm 130 die zum Verbindungsaufbau benötigte Hardware frei. Dem Verfahrensschritt 164 folgt unmittelbar ein Verfahrensschritt 166, in welchem das e-Mail-Programm die Verbindung zum Internet 38 aufbaut und die e-Mail versendet. Nach dem Verfahrensschritt 166 wird die Programmausführung des e-Mail-Programms in einem Verfahrensschritt 168 fortgesetzt.

Stellt das Sicherheitsprogramm 130 im Verfahrensschritt 164 dagegen fest, dass der Teilnehmer TlnA dem Verbindungsaufbau nicht zustimmt, so folgt unmittelbar nach dem Verfahrensschritt 164 ein Verfahrensschritt 168. Der Teilnehmer TlnA kann in diesem Fall keine e-Mail versenden.

Das Verfahren wird in einem Verfahrensschritt 170 mit dem Schließen des e-Mail-Programms beendet. Beim nächsten Versenden oder Abholen einer e-mail werden die Verfahrensschritte 160 bis 170 erneut ausgeführt.

Figur 4 zeigt zum Übertragen und Ausführen des e-Mail-Programms eingesetzte Einheiten des Servers 14. Eine Empfangseinheit 200 empfängt das Programmpaket 100, siehe Pfeil 102. Die Empfangseinheit 200 leitet das Programmpaket 100 ohne Zwischenspeicherung an eine Registriereinheit 204 weiter, welche die Installation und die Registrierung des Programms ausführt. Dabei wird das Programm im Speicher 44 gespeichert, siehe Pfeil 206.

Eine Prüfeinheit 208 übernimmt die Funktionen des Sicherheitsprogramms 130 und prüft vor einem Verbindungsaufbau, ob das Berechtigungsdatum den Verbindungsaufbau zulässt. Die Prüfeinheit 208 greift dabei auf das im Speicher 44 gespeicherte Berechtigungsdatum 112 zu, siehe Pfeil 210.

Bei einem anderen Ausführungsbeispiel werden die Funktionen der Einheiten 200, 204 und 208 durch Schaltungseinheiten erbracht, die kein Programm ausführen. Auch Mischformen zwischen reinen schaltungstechnischen Lösungen und programmgesteuerten Lösungen sind möglich.

Bei einem weiteren Ausführungsbeispiel dient das Endgerät 10 nur als Netzzugangseinheit. Das Programm wird in eine vom Endgerät 10 getrennte Datenverarbeitungsanlage 250 übertragen, siehe Figur 1. Die Datenverarbeitungsanlage 250 ist beispielsweise ein Personalcomputer, ein sogenannter PDA (Personal Digital Assistant) oder ein Notebook. Beispielsweise sind Datenverarbeitungsanlage 250 und Endgerät 10 über eine Infrarotschnittstelle 252 oder über ein Kabel zur seriellen oder parallelen Datenübertragung verbunden. Die Anforderung 50 geht bei diesem Ausführungsbeispiel von der Datenverarbeitungsanlage 250 aus. Außerdem wird das Programmpaket vom Endgerät 10 zur Datenverarbeitungsanlage 250 übertragen, wo dann zu Zeitpunkten t6a und t200a Verfahrensschritte ausgeführt werden, die denen zum Zeitpunkt t6 bzw. t200 entsprechen, siehe Zeitstrahl Z0. Im übrigen bleiben die an Hand der Figur 1 erläuterten Verfahrensschritte unverändert.

Bei einem nächsten Ausführungsbeispiel sind Endgerät 10 und Datenverarbeitungsanlage 250 in einem Gerät vorhanden. Solche Geräte sind zunehmend im Handel erhältlich.

## Patentansprüche

1. Verfahren zum Vorgeben und Prüfen einer Verbindungsaufbauberechtigung,
bei dem für ein Programm (104) vor der Übermittlung zu einem Gerät (10) eines Nutzers (TlnA) ein Berechtigungsdatum (112) vorgegeben wird, dessen Wert Verbindungsaufbaurechte angibt,
bei dem das Programm (104) gemeinsam mit dem Berechtigungsdatum (112) zu dem Gerät (10) übermittelt wird (50),
bei dem das Programm (104) in einer Speichereinheit des Gerätes (10) gemeinsam mit dem Berechtigungsdatum (112) gespeichert wird,
bei dem beim Ausführen des Programms (104) ein Verbindungsaufbau über ein Datenübertragungsnetz (16) veranlasst wird,
und bei dem ein von dem Programm (104) unabhängiges Sicherheitsprogramm (130) den Verbindungsaufbau abhängig vom Wert des Berechtigungsdatums (112) zulässt oder verweigert (162, 164).

2. Verfahren nach Anspruch 1, **dadurch gekennzeichnet, dass** das Verfahren in einem Endgerät (10) eines Datenübertragungsnetzes (16, 28, 38) ausgeführt wird, insbesondere eines Mobilfunk-Datenübertragungsnetzes (16).

3. Verfahren nach Anspruch 1 oder 2, **dadurch gekennzeichnet, dass** das Berechtigungsdatum (112) außerhalb von Maschinenbefehlen oder Befehlen in einem Bytecode des Programms (104) übermittelt wird.

4. Verfahren nach einem der vorhergehenden Ansprüche, **dadurch gekennzeichnet, dass** mindestens zwei Arten von Programmtypen und mindestens zwei Werte für das Berechtigungsdatum (112) festgelegt werden,
dass zulässige Zuordnungen der Programmtypen zu mindestens einem Wert vorgegeben werden,
und dass der Wert des Berechtigungsdatums abhängig vom Programmtyp einen gemäß Zuordnung zugelassenen Wert hat.

5. Verfahren nach Anspruch 4, **dadurch gekennzeichnet, dass** die Zuordnung in einem Standard festgelegt ist, vorzugsweise in einem international gültigen Standard.

6. Verfahren nach Anspruch 4 oder 5, **dadurch gekennzeichnet, dass** ein Drittanbieter-Programmtyp festgelegt wird, dem mindestens ein Programm (104) zugeordnet wird, das von einem Dritten zur Verfügung gestellt wird, der sich vom Hersteller des Gerätes (10) und vom Netzbetreiber, des Netzes unterscheidet, über welches das Gerät (10) die Verbindung aufbaut,
und/oder dass ein Gerätehersteller-Programmtyp festgelegt wird, dem mindestens ein Programm (104) zugeordnet wird, das von einem Gerätehersteller des Gerätes (10) zur Verfügung gestellt wird,
und/oder dass ein Netzbetreiber-Programmtyp festgelegt wird, dem mindestens ein Programm (104) zugeordnet wird, das vom Netzbetreiber des Datenübertragungsnetzes (16, 28, 38) zur Verfügung gestellt wird, über welches das Gerät (10) die Verbindung aufbaut.

7. Verfahren nach einem der Ansprüche 4 bis 6, **dadurch gekennzeichnet, dass** ein Wert einen Verbindungsaufbau mit Zustimmung eines Nutzers (TlnA) ermöglicht,
und/oder dass ein Wert einen uneingeschränkten Verbindungsaufbau ermöglicht,
und/oder dass ein Wert einen Verbindungsaufbau abhängig von der Höhe eines Guthabens ermöglicht,
und dass die Werte voneinander verschieden sind.

8. Verfahren nach einem der vorhergehenden Ansprüche, **dadurch gekennzeichnet, dass** der Wert des Berechtigungsdatums (112) im Gerät (10) nicht geändert werden kann,
oder dass der Wert des Berechtigungsdatums (112) nur mit Hilfe des Sicherheitsprogramms (130) geändert werden kann.

9. Verfahren nach einem der vorhergehenden Ansprüche, **dadurch gekennzeichnet, dass** das Sicherheitsprogramm (130) das Zulassen und/oder Verweigern eines Verbindungsaufbaus in einer Protokolldatei vermerkt.

10. Verfahren nach einem der vorhergehenden Ansprüche, **dadurch gekennzeichnet, dass** zusammen mit dem Berechtigungsdatum (112) mindestens ein digitales Zertifikat (110) und/oder ein digitaler Schlüssel (108) übertragen werden.

11. Verfahren nach Anspruch 10, **dadurch gekennzeichnet, dass** das Berechtigungsdatum (112) digital verschlüsselt übermittelt und/oder digital verschlüsselt gespeichert wird.

12. Verfahren nach Anspruch 10 und/oder 11, **dadurch gekennzeichnet, dass** die Protokolldatei digital verschlüsselt gespeichert wird.

13. Programmdatenpaket (100),
mit Programmdaten (104) in einem Maschinencode oder in einem Bytecode,
und mit Metadaten (106), die nicht Bestandteil der Programmdaten (104) sind,
**dadurch gekennzeichnet, dass** die Metadaten (106) ein Berechtigungsdatum (112) enthalten, dessen Wert Verbindungsaufbaurechte angibt.

14. Programmdatenpaket (100) nach Anspruch 13, **dadurch gekennzeichnet, dass** das Datenpaket (100) gemäß einem Verfahren nach einem der Ansprüche 1 bis 12 übermittelt wird.

15. Vorrichtung, insbesondere Datenverarbeitungsanlage (14),
mit einer Programmausführeinheit (42), die ein Programm (104) ausführt, das einen Verbindungsaufbau über ein Datenübertragungsnetz (16) veranlasst,
**gekennzeichnet durch** eine Prüfeinheit (130, 208), die abhängig vom Wert eines dem Programm (104) zugeordneten Berechtigungsdatums (112), dessen Wert Verbindungsaufbaurechte angibt, den Verbindungsaufbau zulässt oder verweigert (162, 164).

16. Vorrichtung nach Anspruch 15, **gekennzeichnet durch** eine Empfangseinheit (200), die das Programm (104) gemeinsam mit dem Berechtigungsdatum (112) empfängt.

17. Vorrichtung (14) nach Anspruch 15 oder 16, **dadurch gekennzeichnet, dass** die Vorrichtung (14) Einheiten (204) enthält, welche Verfahrensschritte nach einem der Ansprüche 1 bis 12 ausführen.

18. Programm (130) mit einer Befehlsfolge, **dadurch gekennzeichnet, dass** bei deren Ausführung durch einen Prozessor (42) abhängig vom Wert eines Berechtigungsdatums (112), dessen Wert ein Verbindungsaufbaurecht angibt, ein Verbindungsaufbau eines anderen Programms (104) zugelassen oder verweigert wird (162, 164).

19. Programm (130) nach Anspruch 18, **dadurch gekennzeichnet, dass** bei seiner Ausführung ein Verfahren nach einem der Ansprüche 1 bis 12 durchgeführt wird.
